(19) Europäisches Patentamt
European Patent Office
Office européen des brevets

(11) **EP 4 135 223 B1**

(12) **EUROPÄISCHE PATENTSCHRIFT**

(45) Veröffentlichungstag und Bekanntmachung des Hinweises auf die Patenterteilung:
**24.07.2024 Patentblatt 2024/30**

(21) Anmeldenummer: **22189495.9**

(22) Anmeldetag: **09.08.2022**

(51) Internationale Patentklassifikation (IPC):
***H04B 17/29*** *(2015.01)* ***G01F 23/284*** *(2006.01)*
***G01F 23/2962*** *(2022.01)*

(52) Gemeinsame Patentklassifikation (CPC):
**H04B 17/29; G01F 23/284; G01F 23/2962**

(54) **VERFAHREN ZUR ERHÖHUNG EINER QUALITÄT VON ABGETASTETEN EMPFANGSSIGNALEN UND MESSGERÄT ZUR ZEITBEREICHSREFLEKTOMETRIE**

METHOD FOR INCREASING THE QUALITY OF SAMPLED RECEIVED SIGNALS AND MEASURING APPARATUS FOR TIME DOMAIN REFLECTOMETRY

PROCÉDÉ D'AMÉLIORATION DE LA QUALITÉ DES SIGNAUX DE RÉCEPTION BALAYÉS ET APPAREIL DE MESURE POUR LA RÉFLECTOMÉTRIE À DIMENSION TEMPORELLE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **10.08.2021 DE 102021120821**

(43) Veröffentlichungstag der Anmeldung:
**15.02.2023 Patentblatt 2023/07**

(73) Patentinhaber: **Krohne S.A.S.**
**26103 Romans-sur-Isere Cedex (FR)**

(72) Erfinder:
• **Vogt, Michael**
**44797 Bochum (DE)**

• **Pichot, Vincent**
**26100 Romans sur Isère (FR)**
• **Milhaud, Vincent**
**26000 Valence (FR)**

(74) Vertreter: **Gesthuysen Patentanwälte**
**Partnerschaftsgesellschaft mbB**
**Huyssenallee 68**
**45128 Essen (DE)**

(56) Entgegenhaltungen:
**EP-A1- 3 467 451     DE-A1- 102015 100 555**
**DE-A1- 19 949 992**

**Beschreibung**

Zum einen betrifft die Erfindung ein Verfahren zur Erhöhung einer Qualität von abgetasteten Empfangssignalen mit einer Signalverarbeitungsvorrichtung.

Die Signalverarbeitungsvorrichtung weist eine Steuerung, einen Empfangssignalgenerator, einen Abtastsignalgenerator zur Erzeugung von Abtastsignalen $s_A$, einen Mischer und ein Tiefpassfilter mit einer Tiefpassgrenzfrequenz $f_{T,G}$ auf. Der Empfangssignalgenerator ist zur Erzeugung von Empfangssignalen $s_E$ mit einer oberen Empfangssignalgrenzfrequenz $f_{E,G}$ ausgebildet. Zum anderen betrifft die Erfindung ein Messgerät zur Zeitbereichsreflektometrie mit einer Signalverarbeitungsvorrichtung.

Die Signalverarbeitungsvorrichtung des Messgeräts weist eine Steuerung, einen Empfangssignalgenerator, einen Abtastsignalgenerator zur Erzeugung von Abtastsignalen $s_A$, einen Mischer und ein Tiefpassfilter mit einer Tiefpassgrenzfrequenz $f_{T,G}$ auf. Der Empfangssignalgenerator ist zur Erzeugung von Empfangssignalen $s_E$ mit einer oberen Empfangssignalgrenzfrequenz $f_{E,G}$ ausgebildet.

Der Empfangssignalgenerator weist einen Sendesignalgenerator zur Erzeugung und Aussendung von Sendesignalen ss und eine Messsonde auf.

Die Messsonde ist zur Führung der Sendesignale ss und der Empfangssignale $s_E$ und zur Erzeugung von den Empfangssignalen $s_E$ durch Reflexion der Sendesignale $s_S$ an einem Übergang der Messsonde zu einem Medium ausgebildet. Der Übergang der Messsonde zum Medium entsteht zum Beispiel dadurch, dass die Messsonde teilweise in das Medium eingetaucht ist.

Aus der DE19949992A1 ist ein Verfahren zur Erhöhung der Störfestigkeit eines Zeitbereichsreflektometers und eine Schaltungsanordnung zur Durchführung des Verfahrens bekannt.

Aus dem Stand der Technik ist weiter das nachfolgend beschriebene Verfahren bekannt. Das Verfahren wird zum Beispiel von dem Messgerät im Betrieb ausgeführt. Das Messgerät ist demnach zur Ausführung dieses Verfahrens ausgebildet.

Von der Steuerung wird der Empfangssignalgenerator mit einer Empfangssignalwiederholrate $f_{E,W}$ getriggert, wodurch eine aus den Empfangssignalen $s_E$ bestehende Empfangssignalfolge erzeugt wird. Die Empfangssignale werden von dem Empfangssignalgenerator erzeugt. Und zwar wird durch jede Triggerung eines der Empfangssignale erzeugt. Weiter wird von der Steuerung der Abtastsignalgenerator mit der Abtastsignalwiederholrate $f_{A,W}$ getriggert, wodurch eine aus den Abtastsignalen $s_A$ bestehende Abtastsignalfolge erzeugt wird. Die Abtastsignale werden von dem Abtastsignalgenerator erzeugt. Und zwar wird durch jede Triggerung eines der Abtastsignale erzeugt. Demnach folgen die Empfangssignale aufeinander in der Empfangssignalfolge mit der Empfangssignalwiederholrate und folgen die Abtastsignale aufeinander in der Abtastsignalfolge mit der Abtastsignalwiederholrate. Die Empfangssignalfolge und die Abtastsignalfolge werden von dem Mischer gemischt, wodurch die Empfangssignale mit den Abtastsignalen abgetastet werden, sodass abgetastete Empfangssignale vorliegen, und eine Mischsignalfolge erzeugt wird. Die Mischsignalfolge weist Mischprodukte aus den Empfangssignalen und den Abtastsignalen auf.

Die Empfangssignale $s_E$, insbesondere eine Empfangssignalbandbreite der Empfangssignale, die Empfangssignalwiederholrate $f_{E,W}$, die Abtastsignale $s_A$ und die Abtastsignalwiederholrate $f_{A,W}$ werden dabei derart gewählt, dass eines der Mischprodukte in der Mischsignalfolge zumindest im Wesentlichen in einem Durchlassbereich des Tiefpassfilters liegt. Der Durchlassbereich wird durch die Tiefpassgrenzfrequenz $f_{T,G}$ bestimmt. Dieses Mischprodukt weist die Empfangssignale auf und wird dann zum Beispiel von einem Analog-Digital-Umsetzer digitalisiert. Somit liegen dann digitalisierte Empfangssignale vor. Die digitalisierten Empfangssignale werden zum Beispiel durch eine Auswertevorrichtung ausgewertet.

Die Steuerung des Messgeräts ist zum Beispiel ausgebildet, eine Position der Reflexion der Sendesignale, welche die Empfangssignale erzeugt, entlang der Messsonde aus einer Signallaufzeit zu bestimmen. Die Signallaufzeit ist zum Beispiel ein zeitlicher Abstand zwischen einem der Sendesignale und dem von diesem hervorgerufenen Empfangssignal. Dabei werden die Empfangssignale in dem Mischprodukt verwendet, welches zumindest im Wesentlichen im Durchlassbereich des Tiefpassfilters liegt.

Oftmals werden die Empfangssignale jedoch von Störsignalen überlagert. Das Überlagern erfolgt zum Beispiel durch Einstrahlen der Störsignale in den Empfangssignalgenerator. Die den Empfangssignalen überlagerten Störsignale sind dann auch in dem Mischprodukt enthalten, welches zumindest im Wesentlichen im Durchlassbereich des Tiefpassfilters liegt. Das trifft auf Störsignale mit einer Frequenz $f_D$ zu, welche die Bedingung $|f_D - n \cdot f_A| \leq f_{T,G}$ mit $n \in \mathbb{N}_0$ erfüllt. Ein Störsignal kann auch mehrere Frequenzen aufweisen, die diese Bedingung erfüllen. Störsignale mit Frequenzen, welche diese Bedingung erfüllen, werden als schmalbandig angesehen. Diese Störsignale überlagern die Empfangssignale und vermindern auf diese Weise eine Qualität der abgetasteten Empfangssignale.

Eine Aufgabe der vorliegenden Erfindung ist deshalb die Angabe eines Verfahrens und eines Messgeräts der beschriebenen Art, welche eine Qualität der abgetasteten Empfangssignale im Durchlassbereich des Tiefpassfilters beim gleichzeitigen Empfang von Störsignalen erhöhen.

Zum einen ist die Aufgabe durch ein Verfahren mit den Merkmalen von Patentanspruch 1 gelöst.

Und zwar wird von der Steuerung eine Menge $I \subset \mathbb{N}$ und eine Mehrzahl von Abtastsignalwiederholraten $f_{A,W,i}$ mit einer Laufvariablen i für alle i ∈ I erzeugt. Demnach ist die Menge I eine Teilmenge der natürlichen Zahlen N und i nimmt nacheinander die Werte aller Elemente in der Menge I an. Die Menge der natürlichen Zahlen ist {1, 2, 3, 4, ...}. Die Anzahl der Abtastsignalwiederholraten entspricht der Anzahl der Elemente in der Menge I.

Weiter wird von der Steuerung eine zu jeder der Abtastsignalwiederholraten $f_{A,W,i}$ gehörende Empfangssignalwiederholrate mit einem Faktor c = $f_{E,G}/(f_{E,G} - f_{T,G})$ entweder gemäß $f_{E,W,i}$ = c · $f_{A,W,i}$ oder gemäß $f_{E,W,i}$ = 1/c · $f_{A,W,i}$ mit $f_{E,W,i} \neq f_{A,W,i}$ bestimmt. Demnach werden die Abtastsignalwiederholraten für alle i ∈ I entweder gemäß $f_{E,W,i}$ = c · $f_{A,W,i}$ oder gemäß $f_{E,W,i}$ = 1/c · $f_{A,W,i}$ bestimmt.

Der Faktor c ist größer als Null.

Dann werden für alle i ∈ I die folgenden Schritte ausgeführt:

- Erzeugen einer aus den Empfangssignalen $s_E$ bestehenden Empfangssignalfolge $s_{E,F,i}$. Das erfolgt, indem von der Steuerung der Empfangssignalgenerator mit der Empfangssignalwiederholrate $f_{E,W,i}$ getriggert wird.
- Erzeugen einer aus den Abtastsignalen $s_A$ bestehenden Abtastsignalfolge $s_{A,F,i}$. Das erfolgt, indem von der Steuerung der Abtastsignalgenerator mit der Abtastsignalwiederholrate $f_{A,W,i}$ getriggert wird.
- Erzeugen einer Mischsignalfolge $s_{M,F,i}$. Das erfolgt, indem durch den Mischer die Empfangssignalfolge $s_{E,F,i}$ und die Abtastsignalfolge $s_{A,F,i}$ miteinander gemischt werden. Vorzugsweise ist die Anforderung $f_{E,W,i} \neq f_{A,W,i}$ dadurch umgesetzt, dass $f_{E,W,i}$ > $f_{A,W,i}$ ist. Der Mischer ist ein Abwärtsmischer und in diesem Fall dann in Gleichlage. Die Anforderung $f_{E,W,i} \neq f_{A,W,i}$ kann aber auch dadurch umgesetzt sein, dass $f_{E,W,i}$ < $f_{A,W,i}$ ist.
- Tiefpassfiltern der Mischsignalfolge $s_{M,F,i}$ von dem Tiefpassfilter. Wie bereits ausgeführt worden ist, liegt eines der Mischprodukte in der Mischsignalfolge zumindest im Wesentlichen im Durchlassbereich des Tiefpassfilters.
- Bestimmen eines Qualitätsindikators $Q_i$ der tiefpassgefilterten Mischsignalfolge $s_{M,F,i}$ von der Steuerung. Demnach wird der Qualitätsindikator für das Mischprodukt, also das abgetastete Empfangssignal, bestimmt, welches zumindest im Wesentlichen im Durchlassbereich des Tiefpassfilters liegt.

Nach dem Ausführen der vorstehenden Schritte für alle i ∈ I gibt es nun eine Anzahl von Tripeln, die der Anzahl der Elemente in der Menge I entspricht. Das i-te Tripel besteht aus dem Qualitätsindikator $Q_i$, der Empfangssignalwiederholrate $f_{E,W,i}$ und der Abtastsignalwiederholrate $f_{A,W,i}$.

Dann wird von der Steuerung aus den bestimmten Qualitätsindikatoren ein Qualitätsindikator $Q_i$ ausgewählt, also i = k ∈ I, der eine vorgegebene Qualitätsschwelle überschreitet. Vorzugsweise wird der Qualitätsindikator $Q_i$ mit der höchsten Qualität ausgewählt. Die Qualitätsschwelle wird zum Beispiel der Steuerung vorgegeben. Weiter werden die zu diesem Qualitätsindikator $Q_i$ gehörende Abtastsignalwiederholrate $f_{A,W,i}$ und die Empfangssignalwiederholrate $f_{E,W,i}$ anschließend verwendet. Demnach werden die Abtastsignalwiederholrate und die Empfangssignalwiederholrate aus dem k-ten Tripel verwendet.

Die Steuerung triggert sowohl den Empfangssignalgenerator als auch den Abtastsignalgenerator, wie bereits beschrieben worden ist. Zur Übertragung eines Empfangstriggersignals mit der Empfangssignalwiederholrate von der Steuerung zum Empfangssignalgenerator gibt es einen Empfangstriggersignalpfad zwischen der Steuerung und dem Empfangssignalgenerator. Das Empfangstriggersignal wird von der Steuerung erzeugt und triggert den Empfangssignalgenerator. Zur Übertragung eines Abtasttriggersignals mit der Abtastsignalwiederholrate von der Steuerung zum Abtastsignalgenerator gibt es einen Abtasttriggersignalpfad zwischen der Steuerung und dem Abtastsignalgenerator. Das Abtasttriggersignal wird von der Steuerung erzeugt und triggert den Abtastsignalgenerator.

Die Steuerung bestimmt die Qualitätsindikatoren $Q_i$ aus der tiefpassgefilterten Mischsignalfolge. Zur Übertragung der tiefpassgefilterten Mischsignalfolge vom Tiefpassfilter zur Steuerung gibt es einen Mischsignalpfad zwischen dem Tiefpassfilter und der Steuerung.

Das erfindungsgemäße Verfahren hat gegen über dem beschriebenen aus dem Stand der Technik bekannten Verfahren den Vorteil, dass bei der Verwendung der Abtastsignalwiederholrate $f_{A,W,i}$ und die Empfangssignalwiederholrate $f_{E,W,i}$ mit i = k das Störsignal in dem Mischprodukt, welches zumindest im Wesentlichen im Durchlassbereich des Tiefpassfilters liegt, entweder nicht mehr vorhanden oder zumindest reduziert ist. Dadurch ist die Qualität der abgetasteten Empfangssignale im Durchlassbereich des Tiefpassfilters erhöht. Eine Veränderung der Tiefpassgrenzfrequenz $f_{T,G}$ des Tiefpassfilters ist nicht erforderlich, weshalb ein Tiefpassfilter mit konstanter Tiefpassgrenzfrequenz verwendet werden kann.

In einer Ausgestaltung des Verfahrens werden die Abtastsignalwiederholraten wie nachfolgend beschrieben von der Steuerung bestimmt. Zunächst werden eine Start-Abtastsignalwiederholrate $f_{A,W,0}$ und ein Interpolationsfaktor $N \in \{\mathbb{N} \geq 3\}$ vorgegeben. Zum Beispiel werden sie in der Steuerung abgespeichert. Dann wird eine Menge I = {i :

$i \in \{1, ..., N\} \subseteq I$ und $(i + N) \in \mathbb{P}\}$ bestimmt. Während links vom Gleichheitszeichen die neue Menge I steht, steht rechts vom Gleichheitszeichen die bisherige Menge I. Die neue Menge I erfüllt zwei Bedingungen. Zum einen die Bedingung, dass i sowohl Element der Menge {1, ..., N} als auch der bisherigen Menge I ist. Zum anderen die Bedingung, dass (i + N) eine Primzahl ist. Dann werden die Abtastsignalwiederholraten gemäß $f_{A,W,i} = f_{A,W,0}$ (1 + (i-1)/N) für alle i $\in$ I bestimmt. In einer Weiterbildung dieser Ausgestaltung werden die Abtastsignalwiederholraten nur für eine Teilmenge der Menge I bestimmt.

In einer zur vorstehenden Ausgestaltung alternativen Ausgestaltung werden die Abtastsignalwiederholraten wie nachfolgend beschrieben von der Steuerung bestimmt. Zunächst werden eine Start-Abtastsignalwiederholrate $f_{A,W,0}$ und ein Interpolationsfaktor $N \in \{\mathbb{N} \geq 3 \text{ und } N \in \mathbb{P}\}$ vorgegeben. Der Interpolationsfaktor muss also größer oder gleich 3 und auch eine Primzahl sein. Zum Beispiel werden sie in der Steuerung abgespeichert. Dann wird eine Menge I = {i : i $\in$ {1, ..., N} $\subseteq$ I} bestimmt. Während links vom Gleichheitszeichen die neue Menge I steht, steht rechts vom Gleichheitszeichen die bisherige Menge I. Die neue Menge I erfüllt eine Bedingung. Und zwar, dass i sowohl Element der Menge {1, ..., N} als auch der bisherigen Menge I ist. Dann werden die Abtastsignalwiederholraten gemäß $f_{A,W,i} = f_{A,W,0}$ (1 + (i-1)/N) für alle i $\in$ I bestimmt. In einer Weiterbildung dieser Ausgestaltung werden die Abtastsignalwiederholraten nur für eine Teilmenge der Menge I bestimmt.

In einer weiteren Ausgestaltung ist jedes der Empfangssignale $s_E$ ein Puls, bevorzugt ein breitbandiger Puls und besonders bevorzugt ein Dirac-Puls. In einer Ausgestaltung ist jedes der Abtastsignale $s_A$ ein Puls, bevorzugt ein breitbandiger Puls und besonders bevorzugt ein Dirac-Puls. Ein Dirac-Puls ist demnach ein breitbandiger Puls, der einen idealen Dirac-Puls im Rahmen der technischen Möglichkeiten annähert.

In einer weiteren Ausgestaltung ist jeder der Qualitätsindikatoren Qi ein Signal-Stör-Abstand der tiefpassgefilterten Mischsignalfolge.

In einer Ausgestaltung des Empfangssignalgenerators weist dieser einen Sendesignalgenerator zur Erzeugung und Aussendung von Sendesignalen ss und eine Messsonde auf. Die Messsonde ist zur Führung der Sendesignale ss und der Empfangssignale $s_E$ und zur Erzeugung von den Empfangssignalen $s_E$ durch Reflexion der Sendesignale $s_S$ an einem Übergang der Messsonde zu einem Medium ausgebildet. Dementsprechend werden vom Sendesignalgenerator die Sendesignale erzeugt und ausgesendet. Von der Messsonde werden die Sendesignale zunächst zum Übergang geführt, an welchem durch Reflexion die Empfangssignale erzeugt werden, und dann werden die Empfangssignale zurück über die Messsonde geführt. Demnach bedeutet die Triggerung des Empfangssignalgenerators eine Triggerung des Sendesignalgenerators.

In einer weiteren Ausgestaltung wird das Empfangssignal $s_E$ von dem Empfangssignalgenerator erzeugt, indem ein Sendesignal $s_S$ erzeugt und ausgesendet und das Empfangssignal $s_E$ durch eine Reflexion des Sendesignals $s_S$ an einem Übergang erzeugt wird.

Zum anderen ist die Aufgabe auch durch ein Messgerät mit den Merkmalen von Patentanspruch 7 gelöst.

Und zwar ist die Steuerung ausgebildet:

- Zum Erzeugen einer Menge $I \subset \mathbb{N}$ und eine Mehrzahl von Abtastsignalwiederholraten $f_{A,W,i}$ mit einer Laufvariablen i für alle i $\in$ I.
- Zum Bestimmen einer zu jeder der Abtastsignalwiederholraten $f_{A,W,i}$ gehörende Empfangssignalwiederholrate mit einem Faktor c = $f_{E,G}/(f_{E,G} - f_{T,G})$ entweder gemäß $f_{E,W,i} = c \cdot f_{A,W,i}$ oder gemäß $f_{E,W,i} = 1/c \cdot f_{A,W,i}$ mit $f_{E,W,i} \neq f_{A,W,i}$.

Weiter ist die Steuerung ausgebildet für alle i $\in$ I:

- Zum Erzeugen einer aus den Empfangssignalen $s_E$ bestehenden Empfangssignalfolge $s_{E,F,i}$ durch Triggern des Empfangssignalgenerators mit der Empfangssignalwiederholrate $f_{E,W,i}$.
- Zum Erzeugen einer aus den Abtastsignalen $s_A$ bestehenden Abtastsignalfolge $s_{A,F,i}$ durch Triggern des Abtastsignalgenerators mit der Abtastsignalwiederholrate $f_{A,W,i}$.
- Zum Bestimmen eines Qualitätsindikators $Q_i$ aus einer von dem Tiefpassfilter tiefpassgefilterten Mischsignalfolge $s_{M,F,i}$. Dabei ist die Mischsignalfolge von dem Mischer durch Mischen der Empfangssignalfolge $s_{E,F,i}$ und der Abtastsignalfolge $s_{A,F,i}$ erzeugt. Demnach ist der Mischer zum Erzeugen der Mischsignalfolge durch Mischen der Empfangssignalfolge und der Abtastsignalfolge miteinander ausgebildet. Weiter ist der Tiefpassfilter zum Tiefpassfiltern der Mischsignalfolge ausgebildet.

Weiter ist die Steuerung ausgebildet, dann aus den bestimmten Qualitätsindikatoren einen Qualitätsindikator $Q_i$ auszuwählen, der eine vorgegebene Qualitätsschwelle überschreitet, und die zu diesem gehörende Abtastsignalwiederholrate $f_{A,W,i}$ und die Empfangssignalwiederholrate $f_{E,W,i}$ anschließend zu verwenden.

Im Betrieb wird das Messgerät gemäß seiner beschriebenen Ausbildung betrieben. Demnach führt es ein Verfahren gemäß seiner Ausbildung aus.

In einer Ausgestaltung des Messgeräts ist vorgesehen, dass die Steuerung ausgebildet ist, eines der beschriebenen Verfahren auszuführen.

In einer weiteren Ausgestaltung ist vorgesehen, dass das Messgerät ein Füllstandsmessgerät und die Messsonde eine Füllstandsmesssonde ist.

Im Übrigen gelten die Ausführungen zum Verfahren entsprechend für das Messgerät und umgekehrt.

Im Einzelnen ist eine Vielzahl von Möglichkeiten gegeben, das Verfahren und das Messgerät auszugestalten und weiterzubilden. Dazu wird verwiesen sowohl auf die den unabhängigen Patentansprüchen nachgeordneten Patentansprüche als auch auf die nachfolgende Beschreibung eines bevorzugten Ausführungsbeispiels in Verbindung mit der Zeichnung. In der Zeichnung zeigt

Fig. 1 ein Ausführungsbeispiel eines Messgeräts zur Zeitbereichsreflektometrie,

Fig. 2 ein Ausführungsbeispiel einer Signalverarbeitungsvorrichtung des Messgeräts und

Fig. 3 Beispiele von Signalverläufen der Signalverarbeitungsvorrichtung über der Zeit.

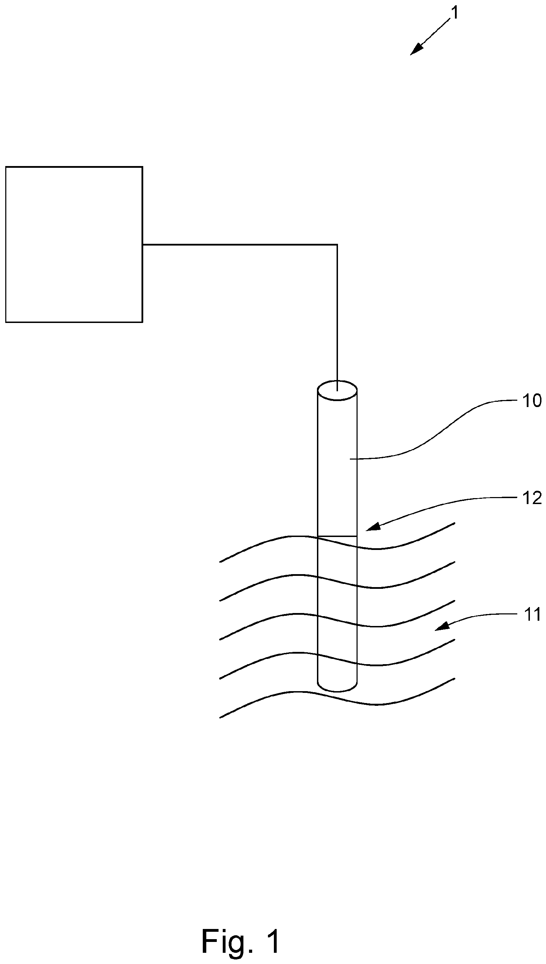

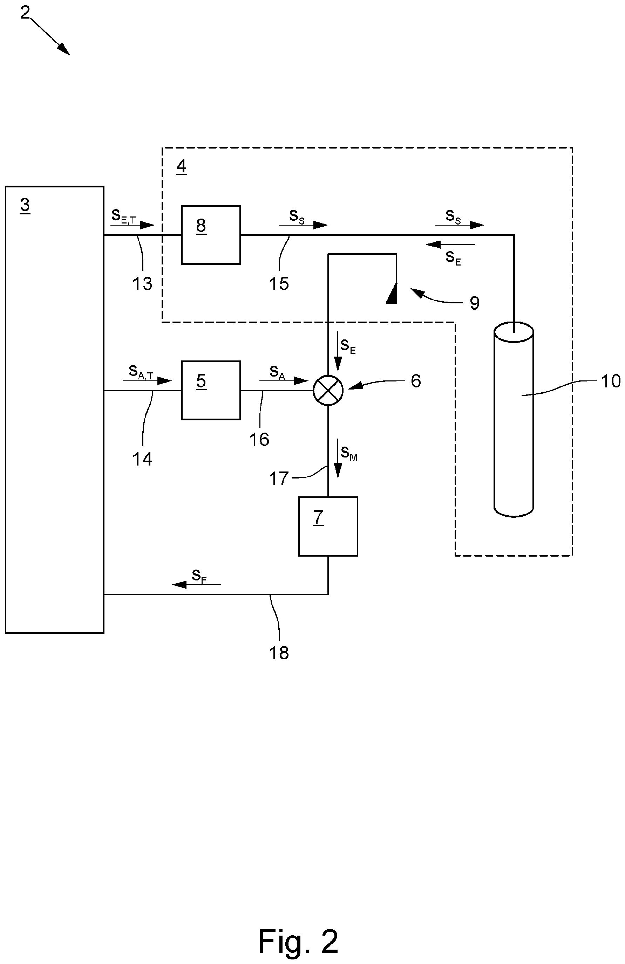

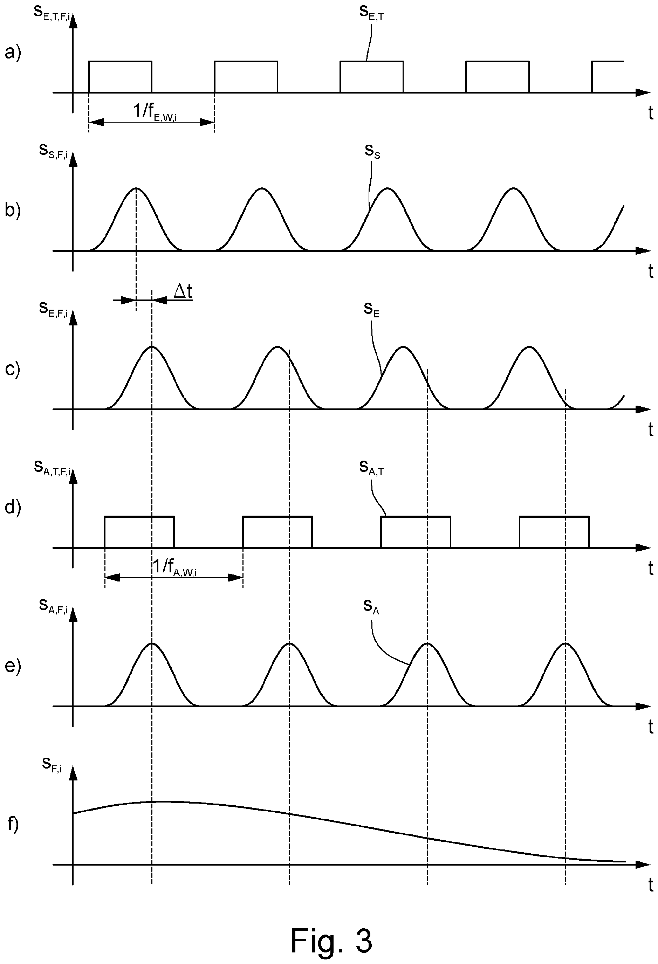

Figur 1 zeigt ein Messgerät 1 zur Zeitbereichsreflektometrie und Figur 2 zeigt ein Ausführungsbeispiel einer Signalverarbeitungsvorrichtung 2 des Messgeräts 1. Figur 3 stellt Signale der Signalverarbeitungsvorrichtung 2 über der Zeit dar. Die Darstellung der Signale über der Zeit ist qualitativ. Insbesondere ist die Darstellung der Zeit nicht maßstabsgerecht.

Die Signalverarbeitungsvorrichtung 2 weist eine Steuerung 3, einen Empfangssignalgenerator 4, einen Abtastsignalgenerator 5 zur Erzeugung von Abtastsignalen $s_A$, und zwar in Form von Dirac-Pulses, einen Mischer 6 und ein Tiefpassfilter 7 mit einer Tiefpassgrenzfrequenz $f_{T,G} = 8$ kHz auf. Der Empfangssignalgenerator 4 ist zur Erzeugung von Empfangssignalen $s_E$ mit einer oberen Empfangssignalgrenzfrequenz $f_{E,G} = 2$ GHz ausgebildet.

Der Empfangssignalgenerator 4 weist einen Sendesignalgenerator 8 zur Erzeugung und Aussendung von Sendesignalen $s_S$, und zwar in Form von Dirac-Pulsen, einen Koppler 9 und eine Messsonde 10 auf. Jedes der Sendesignale ss ist ein Dirac-Puls, weshalb auch jedes der Empfangssignale $s_E$ ein Dirac-Puls ist. Die Messsonde 10 ist teilweise in ein Medium 11 eingetaucht. Das Medium 11 weist einen Füllstand in einem nicht eingezeichneten Behälter auf. Die Messsonde 10 ist zur Führung der Sendesignale $s_S$ und der Empfangssignale $s_E$ und zur Erzeugung der Empfangssignale durch Reflexion der Sendesignale an einem Übergang 12 zwischen der Messsonde 10 und dem Medium 11 ausgebildet. Demnach handelt es sich in diesem Ausführungsbeispiel bei dem Messgerät 1 um ein Füllstandsmessgerät und bei der Messsonde 10 um eine Füllstandsmesssonde.

Die Steuerung 3 ist ausgebildet, eine Menge $I \subset \mathbb{N}$ und eine Mehrzahl von Abtastsignalwiederholraten $f_{A,W,i}$ mit einer Laufvariablen i für alle i ∈ I zu erzeugen und in diesem Ausführungsbeispiel eine zu jeder der Abtastsignalwiederholraten $f_{A,W,i}$ gehörende Empfangssignalwiederholrate gemäß $f_{E,W,i} = (f_{A,W,i} \cdot f_{E,G})/(f_{E,G} - f_{T,G})$ mit $f_{E,W,i} > f_{A,W,i}$ zu bestimmen.

Weiter ist die Steuerung 3 ausgebildet, für alle i ∈ I eine aus den Empfangssignalen $s_E$ bestehende Empfangssignalfolge $s_{E,F,i}$ durch Triggern des Empfangssignalgenerators 4 mit der Empfangssignalwiederholrate $f_{E,W,i}$, eine aus den Abtastsignalen $s_A$ bestehende Abtastsignalfolge $s_{A,F,i}$ durch Triggern des Abtastsignalgenerators 5 mit der Abtastsignalwiederholrate $f_{A,W,i}$ und einen Qualitätsindikator $Q_i$ aus einer von dem Tiefpassfilter 7 tiefpassgefilterten Mischsignalfolge $s_{M,i}$ zu erzeugen. Dabei wird die Mischsignalfolge $s_{M,i}$ von dem Mischer 6 durch Mischen der Empfangssignalfolge $s_{E,F,i}$ und der Abtastsignalfolge $s_{A,F,i}$ miteinander erzeugt. Jeder der Qualitätsindikatoren $Q_i$ ist ein Signal-Stör-Abstand der tiefpassgefilterten Mischsignalfolge, die auch als $s_{F,i}$ bezeichnet wird.

Im Betrieb des Messgeräts 1 triggert die Steuerung 3 sowohl den Empfangssignalgenerator 4 als auch den Abtastsignalgenerator 5. Durch das Triggern des Empfangssignalgenerators 4 wird der Sendesignalgenerator 8 getriggert. Zur Übertragung eines Empfangstriggersignals $s_{E,T}$ mit der Empfangssignalwiederholrate $f_{E,W,i}$ von der Steuerung 3 zum Sendesignalgenerator 8 gibt es einen Empfangstriggersignalpfad 13 zwischen der Steuerung 3 und dem Sendesignalgenerator 8. Das Empfangstriggersignal $s_{E,T}$ wird von der Steuerung 3 erzeugt und triggert den Sendesignalgenerator 8. Zur Übertragung eines Abtasttriggersignals $s_{A,T}$ mit der Abtastsignalwiederholrate $f_{A,W,i}$ von der Steuerung 3 zum Abtastsignalgenerator 5 gibt es einen Abtasttriggersignalpfad 14 zwischen der Steuerung 3 und dem Abtastsignalgenerator 5. Das Abtasttriggersignal $s_{A,T}$ wird von der Steuerung 3 erzeugt und triggert den Abtastsignalgenerator 5.

Weiter gibt es einen Signalpfad 15 zwischen dem Signalgenerator 8 und der Messsonde 10. Über den Signalpfad 15 werden die Sendesignale ss vom Sendesignalgenerator 8 zur Messsonde 10 und in die entgegensetzte Richtung die Empfangssignale $s_E$ übertragen. Der Koppler 9 koppelt die Empfangssignale $s_E$ aus dem Signalpfad 15 aus und für sie zum Mischer 6. Zur Übertragung der Abtastsignale $s_A$ vom Abtastsignalgenerator 5 zum Mischer 6 gibt es einen Abtastsignalpfad 16 zwischen dem Abtastsignalgenerator 5 und dem Mischer 6. Zur Übertragung der Mischsignalfolge $s_M$ vom Mischer 6 zum Tiefpassfilter 7 gibt es einen Mischsignalpfad 17. Die Steuerung 3 bestimmt die Qualitätsindikatoren $Q_i$ aus der tiefpassgefilterten Mischsignalfolge $s_F$. Zur Übertragung der tiefpassgefilterten Mischsignalfolge $s_F$, gibt es einen Tiefpasssignalpfad 18 vom Tiefpassfilter 7 zur Steuerung 3.

Das Messgerät 1 führt im Betrieb ein Verfahren zur Erhöhung einer Qualität von abgetasteten Empfangssignalen mit den folgenden durch Spiegelstriche gekennzeichneten Schritten aus:

- Von der Steuerung wird eine Menge $I \subset \mathbb{N}$ und eine Mehrzahl von Abtastsignalwiederholraten $f_{A,W,i}$ mit einer Laufvariablen i für alle $i \in I$ erzeugt. Und zwar werden eine Start-Abtastsignalwiederholrate $f_{A,W,0} = 1$ MHz und ein Interpolationsfaktor $N \in \{\mathbb{N} \geq 3\}$ vorgegeben. Dann wird eine neue Menge $I = \{i : i \in \{1, ..., N\} \subseteq I \text{ und } (i + N) \in \mathbb{P}\}$ bestimmt und anschließend werden die Abtastsignalwiederholraten gemäß $f_{A,W,i} = f_{A,W,0} (1 + (i-1)/N)$ für $i \in I$ bestimmt.

- Von der Steuerung wird eine zu jeder der Abtastsignalwiederholraten $f_{A,W,i}$ gehörende Empfangssignalwiederholrate gemäß $f_{E,W,i} = (f_{A,W,i} \cdot f_{E,G})/(f_{E,G} - f_{T,G})$ mit $f_{E,W,i} > f_{A,W,i}$ bestimmt.

- In diesem Schritt werden die folgenden durch Spiegelpunkte gekennzeichneten Unterschritte für alle $i \in I$ ausgeführt:

    • Von der Steuerung 3 wird der Sendesignalgenerator 8 des Empfangssignalgenerators 4 mit der Empfangssignalwiederholrate $f_{E,W,i}$ getriggert. Dazu wird von der Steuerung 3 eine aus den Empfangstriggersignalen $s_{E,T}$ bestehende Empfangstriggersignalfolge $s_{E,T,F,i}$ erzeugt und über den Empfangstriggersignalpfad 13 zum Empfangssignalgenerator 4 und in diesem zum Sendesignalgenerator 8 geführt. Die aus den Empfangstriggersignalen $s_{E,T}$ bestehende Empfangstriggersignalfolge $s_{E,T,F,i}$ ist in Figur 3a dargestellt. Vom Sendesignalgenerator 8 werden ausgelöst durch die Triggerung die Sendesignale $s_S$ erzeugt und ausgegeben, welche die Sendesignalfolge $s_{S,F,i}$ bilden. Jedes der Sendesignale ss ist ein Dirac-Puls. Die aus den Sendesignalen ss bestehende Sendesignalfolge $s_{S,F,i}$ ist in Figur 3b dargestellt. Die Sendesignale ss werden über den Signalpfad 15 vom Sendesignalgenerator 8 zur Messsonde 10 geführt und in der Messsonde 10 am Übergang 12 reflektiert, wodurch die Empfangssignale $s_E$ erzeugt werden. Somit ist auch jedes der Empfangssignale $s_E$ ein Dirac-

    Puls. Ein zeitlicher Abstand zwischen einem der Sendesignale $s_S$ und dem durch dieses Sendesignal erzeugten Empfangssignal $s_E$ beträgt $\Delta t$ und repräsentiert eine Laufzeit der Signale, aus welcher die Steuerung 3 einen Füllstand des Mediums 11 bestimmt. Die Empfangssignale $s_E$ breiten sich in zur Ausbreitungsrichtung der Sendesignale $s_S$ entgegengesetzter Richtung aus. Die Empfangssignale $s_E$ werden vom Koppler 9 aus dem Signalpfad 15 ausgekoppelt und zum Mischer 6 geführt. Auf diese Weise wird die aus den Empfangssignalen $s_E$ bestehende Empfangssignalfolge $s_{E,F,i}$ erzeugt. Die aus den Empfangssignalen $s_E$ bestehende Empfangssignalfolge $s_{E,F,i}$ ist in Figur 3c dargestellt.

    • Von der Steuerung 3 wird der Abtastsignalgenerator 5 mit der Abtastsignalwiederholrate $f_{A,W,i}$ getriggert. Dazu wird von der Steuerung 3 eine aus den Abtasttriggersignalen $s_{A,T}$ bestehende Abtasttriggersignalfolge $s_{A,T,F,i}$ erzeugt und über den Abtasttriggersignalpfad 14 zum Abtastsignalgenerator 5 geführt. Die aus den Abtasttriggersignalen $s_{A,T}$ bestehende Abtasttriggersignalfolge $s_{A,T,F,i}$ ist in Figur 3d dargestellt. Vom Abtastsignalgenerator 5 werden ausgelöst durch die Triggerung die Abtastsignale $s_A$ erzeugt und ausgegeben, welche die Abtastsignalfolge $s_{A,F,i}$ bilden. Jedes der Abtastsignale ist ein Dirac-Puls. Die Abtastsignale werden über den Abtastsignalpfad 16 vom Abtastsignalgenerator 5 zum Mischer 6 geführt. Die aus den Abtastsignalen $s_A$ bestehende Abtastsignalfolge $s_{A,F,i}$ ist in Figur 3e dargestellt.

    • Durch den Mischer 6 werden die Empfangssignalfolge $s_{E,F,i}$ und die Abtastsignalfolge $s_{A,F,i}$ miteinander gemischt. Dadurch wird die Mischsignalfolge $s_{M,i}$ erzeugt. Die Mischsignalfolge wird über den Mischsignalpfad 17 vom Mischer 6 zum Tiefpassfilter 7 geführt.

    • Durch das Tiefpassfilter 7 wird die Mischsignalfolge $s_{M,i}$ tiefpassgefiltert. Die tiefpassgefilterte Mischsignalfolge $s_{F,i}$ wird über den Tiefpasssignalfahrt 18 vom Tiefpassfilter 7 zur Steuerung 3 geführt. Die tiefpassgefilterte Mischsignalfolge $s_{F,i}$ ist in Figur 3f dargestellt.

    • Von der Steuerung wird der Qualitätsindikator $Q_i$ der tiefpassgefilterten Mischsignalfolge $s_{F,i}$ bestimmt.

- Von der Steuerung wird aus den bestimmten Qualitätsindikatoren $Q_i$ ein Qualitätsindikator ausgewählt, der die vorgegebene Qualitätsschwelle überschreitet. Anschließend werden die zu diesem Qualitätsindikator gehörende Abtastsignalwiederholrate und Empfangssignalwiederholrate verwendet.

Die einzelnen Signale in den in den Figuren 3a, 3b, 3c, 3d und 3e dargestellten Signalfolgen sind zeitlich weiter beabstandet als in den Figuren dargestellt ist. Die zeitliche Darstellung der Signalfolgen ist demnach nicht maßstabsgerecht. Die Signale der in den Figuren 3b, 3c und 3e dargestellten Signalfolgen sind Dirac-Pulse. Die Darstellung der Signale ist demnach nicht maßstabsgerecht.

Für I = {1, 2, 3, 4} und N = 4 ergibt sich das Folgende:

Die neue Menge I ist $\{i : i \in \{1, ..., 4\} \subseteq I \text{ und } (i + 4) \in \mathbb{P}\} = \{i : 1, 3\}$, da sich nur für $i \in \{1, 3\}$ gemäß (i + N) Primzahlen ergeben, und zwar {5, 7}.

Die erste Abtastsignalwiederholrate ist $f_{A,W,1}$ = 1.000.000 Hz und die erste Empfangssignalwiederholrate ist $f_{E,W,1}$ = 1.000.004 Hz. Die zweite Abtastsignalwiederholrate ist $f_{A,W,3}$ = 1.500.000 Hz und die zweite Empfangssignalwiederholrate ist $f_{E,W,3}$ = 1.500.006 Hz.

In der Praxis werden für gewöhnlich jedoch Mengen I mit mehr Elementen und größere Interpolationsfaktoren N verwendet, zum Beispiel I = {1, 2, 3, 4, ..., 60} und N = 60. Mit diesen ergibt sich das Folgende:

Die neue Menge I ist $\{i : i \in \{1, ..., 60\} \subseteq I \text{ und } (i + 60) \in \mathbb{P}\} = \{i : 1, 7, 11, ...\}$. Weiter wird nur die Teilmenge {i : 1, 7, 11} von I verwendet. Die zu dieser Teilmenge gehörenden Primzahlen sind {61, 67, 71}.

Die erste Abtastsignalwiederholrate ist $f_{A,W,1}$ = 1.000.000 Hz und die erste Empfangssignalwiederholrate ist $f_{E,W,1}$ = 1.000.004 Hz. Die zweite Abtastsignalwiederholrate ist $f_{A,W,7}$ = 1.100.000 und die zweite Empfangssignalwiederholrate ist $f_{E,W,7}$ = 1.100.004,4 Hz. Die dritte Abtastsignalwiederholrate ist $f_{A,W,11}$ = 1.166.666,7 Hz und die dritte Empfangssignalwiederholrate ist $f_{E,W,11}$ = 1.166671,3 Hz.

Schon die Verwendung dieser Teilmenge von I ist ausreichend, um ein Störsignal mit an Sicherheit grenzender Wahrscheinlichkeit ausblenden zu können, da ein Störsignal mit einer Frequenz $f_D$ mit einem Frequenzabstand von 61 · 67 · 71 · 1 MHz = 290.177 · 1 MHz für alle drei Elemente von I vorhanden ist.

**Bezugszeichen**

| 1 | Messgerät |
|---|---|
| 2 | Signalverarbeitungsvorrichtung |
| 3 | Steuerung |
| 4 | Empfangssignalgenerator |
| 5 | Abtastsignalgenerator |
| 6 | Mischer |
| 7 | Tiefpassfilter |
| 8 | Sendesignalgenerator |
| 9 | Koppler |
| 10 | Messsonde |
| 11 | Medium |
| 12 | Übergang |
| 13 | Empfangstriggersignalpfad |
| 14 | Abtasttriggersignalpfad |
| 15 | Signalpfad |
| 16 | Abtastsignalpfad |
| 17 | Mischsignalpfad |
| 18 | Tiefpasssignalpfad |

| $Q_i$ | i-ter Qualitätsindikator |
|---|---|
| $s_A$ | Abtastsignal |
| $s_{A,F,i}$ | i-te Abtastsignalfolge |
| $s_{A,T}$ | Abtasttriggersignal |
| $s_{A,T,F,i}$ | i-te Abtasttriggersignalfolge |

$s_E$    Empfangssignal
$s_{E,F,i}$    i-te Empfangssignalfolge
$s_{E,T}$    Empfangstriggersignal
$s_{E,T,F,i}$    i-te Empfangssignaltriggerfolge
$s_{F,i}$    i-tes tiefpassgefiltertes Mischsignal
$s_{M,i}$    i-tes Mischsignal
$ss$    Sendesignal
$s_{S,F,i}$    i-te Sendesignalfolge

**Patentansprüche**

1.  Verfahren zur Erhöhung einer Qualität von abgetasteten Empfangssignalen ($s_E$) mit einer Signalverarbeitungsvorrichtung (2),

    wobei die Signalverarbeitungsvorrichtung (2) eine Steuerung (3), einen Empfangssignalgenerator (4) zur Erzeugung von Empfangssignalen ($s_E$) mit einer oberen Empfangssignalgrenzfrequenz $f_{E,G}$, einen Abtastsignalgenerator (5) zur Erzeugung von Abtastsignalen ($s_A$), einen Mischer (6) und ein Tiefpassfilter (7) mit einer Tiefpassgrenzfrequenz $f_{T,G}$ aufweist,
    **dadurch gekennzeichnet,**
    **dass** von der Steuerung (3) eine Menge $I \subset \mathbb{N}$ und eine Mehrzahl von Abtastsignalwiederholraten $f_{A,W,i}$ mit einer Laufvariablen i für alle i ∈ I erzeugt wird,
    **dass** von der Steuerung (3) eine zu jeder der Abtastsignalwiederholraten $f_{A,W,i}$ gehörende Empfangssignalwiederholrate entweder gemäß $f_{E,W,i} = c \cdot f_{A,W,i}$ oder gemäß $f_{E,W,i} = 1/c \cdot f_{A,W,i}$ mit $f_{E,W,i} \neq f_{A,W,i}$ mit einem Faktor c $= f_{E,G}/(f_{E,G} - f_{T,G})$ bestimmt wird,
    wobei die Schritte

    - Erzeugen einer aus den Empfangssignalen ($s_E$) bestehenden Empfangssignalfolge ($s_{E,F,i}$), indem von der Steuerung (3) der Empfangssignalgenerator (4) mit der Empfangssignalwiederholrate $f_{E,W,i}$ getriggert wird,
    - Erzeugen einer aus den Abtastsignalen ($s_A$) bestehenden Abtastsignalfolge ($s_{A,F,i}$), indem von der Steuerung (3) der Abtastsignalgenerator (5) mit der Abtastsignalwiederholrate $f_{A,W,i}$ getriggert wird,
    - Erzeugen einer Mischsignalfolge ($s_{M,i}$), indem durch den Mischer (6) die Empfangssignalfolge ($s_{E,F,i}$) und die Abtastsignalfolge ($s_{A,F,i}$) miteinander gemischt werden,
    - Tiefpassfiltern der Mischsignalfolge ($s_{M,i}$) von dem Tiefpassfilter (7) und
    - Bestimmen eines Qualitätsindikators ($Q_i$) der tiefpassgefilterten Mischsignalfolge ($s_{F,i}$) von der Steuerung (3),

    für alle i ∈ I ausgeführt werden und
    **dass** dann von der Steuerung (3) aus den bestimmten Qualitätsindikatoren ein Qualitätsindikator ($Q_i$) ausgewählt wird, der eine vorgegebene Qualitätsschwelle überschreitet, und die zu diesem gehörende Abtastsignalwiederholrate $f_{A,W,i}$ und die Empfangssignalwiederholrate $f_{E,W,i}$ anschließend verwendet werden.

2.  Verfahren nach Anspruch 1, wobei eine Start-Abtastsignalwiederholrate $f_{A,W,0}$ und ein Interpolationsfaktor $N \in \{\mathbb{N} \geq 3\}$ vorgegeben werden, dass eine neue Menge I = {i : i ∈ {1, ..., N} $\subseteq$ I und (i + $N$) ∈ $\mathbb{P}$} bestimmt wird und dass dann für alle i ∈ I die Abtastsignalwiederholraten gemäß $f_{A,W,i} = f_{A,W,0} (1 + (i-1)/N)$ nur für die i bestimmt werden.

3.  Verfahren nach Anspruch 1, wobei eine Start-Abtastsignalwiederholrate $f_{A,W,0}$ und ein Interpolationsfaktor $N \in \{\mathbb{N} \geq 3 \text{ und } N \in \mathbb{P}\}$ vorgegeben werden, dass eine neue Menge I = {i : i ∈ {1, ..., N} $\subset$ I} bestimmt wird und dass dann für alle i ∈ I die Abtastsignalwiederholraten gemäß $f_{A,W,i} = f_{A,W,0} (1 + (i-1)/N)$ nur für die i bestimmt werden.

4.  Verfahren nach einem der Ansprüche 1 bis 3, wobei jedes der Empfangssignale ($s_E$) ein Puls ist und/oder jedes der Abtastsignale ($s_A$) ein Puls ist, bevorzugt ist der Puls bzw. sind die Pulse breitbandig, besonders bevorzugt ist der Puls ein Dirac-Puls bzw. sind die Pulse Dirac-Pulse.

5. Verfahren nach einem der Ansprüche 1 bis 4, wobei jeder der Qualitätsindikatoren ($Q_i$) ein Signal-Stör-Abstand der tiefpassgefilterten Mischsignalfolge ($s_{F,i}$) ist.

6. Verfahren nach einem der Ansprüche 1 bis 5, wobei der Empfangssignalgenerator (4) einen Sendesignalgenerator (8) zur Erzeugung und Aussendung von Sendesignalen ($s_S$) und eine Messsonde (10) aufweist, wobei die Messsonde (10) zur Führung der Sendesignale ($s_S$) und der Empfangssignale ($s_E$) und zur Erzeugung von den Empfangssignalen ($s_E$) durch Reflexion der Sendesignale (ss) an einem Übergang (12) der Messsonde (10) zu einem Medium (11) ausgebildet ist, und wobei vom Sendesignalgenerator (8) die Sendesignale ($s_S$) erzeugt und ausgesendet werden, dass von der Messsonde (10) die Sendesignale ($s_S$) zunächst zum Übergang (12) geführt werden, an welchem durch Reflexion die Empfangssignale ($s_E$) erzeugt werden, und dann die Empfangssignale ($s_E$) zurück über die Messsonde (10) geführt werden.

7. Messgerät (1) zur Zeitbereichsreflektometrie mit einer Signalverarbeitungsvorrichtung (2),

wobei die Signalverarbeitungsvorrichtung (2) eine Steuerung (3), einen Empfangssignalgenerator (4) zur Erzeugung von Empfangssignalen ($s_E$) mit einer oberen Empfangssignalgrenzfrequenz $f_{E,G}$, einen Abtastsignalgenerator (5) zur Erzeugung von Abtastsignalen ($s_A$), einen Mischer (6) und ein Tiefpassfilter (7) mit einer Tiefpassgrenzfrequenz $f_{T,G}$ aufweist,
wobei der Empfangssignalgenerator (4) einen Sendesignalgenerator (8) zur Erzeugung und Aussendung von Sendesignalen (ss) und eine Messsonde (10) aufweist,
wobei die Messsonde (10) zur Führung der Sendesignale ($s_S$) und der Empfangssignale ($s_E$) und zur Erzeugung von den Empfangssignalen ($s_E$) durch Reflexion der Sendesignale (ss) an einem Übergang (12) der Messsonde (10) zu einem Medium (11) ausgebildet ist,
**dadurch gekennzeichnet,**
**dass** die Steuerung (3) ausgebildet ist zunächst

- eine Menge $\mathrm{I} \subset \mathbb{N}$ und eine Mehrzahl von Abtastsignalwiederholraten $f_{A,W,i}$ mit einer Laufvariablen i für alle $i \in I$ zu erzeugen und
- eine zu jeder der Abtastsignalwiederholraten $f_{A,W,i}$ gehörende Empfangssignalwiederholrate entweder gemäß $f_{E,W,i} = c \cdot f_{A,W,i}$ oder gemäß $f_{E,W,i} = 1/c \cdot f_{A,W,i}$ mit $f_{E,W,i} \neq f_{A,W,i}$ mit einem Faktor $c = f_{E,G}/(f_{E,G} - f_{T,G})$ zu bestimmen,

**dass** die Steuerung (3) weiter ausgebildet ist für alle $i \in I$

- eine aus den Empfangssignalen ($s_E$) bestehende Empfangssignalfolge ($s_{E,F,i}$) durch Triggern des Empfangssignalgenerators (4) mit der Empfangssignalwiederholrate $f_{E,W,i}$ zu erzeugen,
- eine aus den Abtastsignalen ($s_A$) bestehenden Abtastsignalfolge ($s_{A,F,i}$) durch Triggern des Abtastsignalgenerators (5) mit der Abtastsignalwiederholrate $f_{A,W,i}$ zu erzeugen,
- einen Qualitätsindikators ($Q_i$) aus einer von dem Tiefpassfilter (7) tiefpassgefilterten Mischsignalfolge ($s_{F,i}$) zu bestimmen, wobei die Mischsignalfolge ($s_{M,i}$) von dem Mischer (6) durch Mischen der Empfangssignalfolge ($s_{E,F,i}$) und der Abtastsignalfolge ($s_{A,F,i}$) erzeugt wird und

**dass** die Steuerung (3) weiter ausgebildet ist, dann aus den bestimmten Qualitätsindikatoren einen Qualitätsindikator ($Q_i$) auszuwählen, der eine vorgegebene Qualitätsschwelle überschreitet, und die zu diesem gehörende Abtastsignalwiederholrate $f_{A,W,i}$ und die Empfangssignalwiederholrate $f_{E,W,i}$ anschließend zu verwenden.

8. Messgerät (1) nach Anspruch 7, wobei die Steuerung (3) ausgebildet ist, ein Verfahren gemäß einem der Ansprüche 2 bis 5 auszuführen.

9. Messgerät (1) nach Anspruch 7 oder 8, wobei das Messgerät (1) ein Füllstandsmessgerät und die Messsonde (10) eine Füllstandsmesssonde ist.

**Claims**

1.  Method for increasing a quality of sampled receive signals ($s_E$) with a signal processing device (2),

    wherein the signal processing device (2) has a controller (3), a receive signal generator (4) for generating receive signals ($s_E$) with an upper receive signal cut-off frequency $f_{E,G}$, a sampling signal generator (5) for generating sampling signals ($s_A$), a mixer (6) and a low-pass filter (7) with a low-pass cut-off frequency $f_{T,G}$

    **characterized in**

    **that** a set $I \subset \mathbb{N}$ and a plurality of sampling signal repetition rates $f_{A,W,i}$ with a running variable i for all i ∈ I are generated by the controller (3),

    **that** a receive signal repetition rate associated with each of the sampling signal repetition rates $f_{A,W,i}$ is determined by the controller (3) with a factor c = $f_{E,G}$/($f_{E,G}$ - $f_{T,G}$) either according to $f_{E,W,i} \approx c \cdot f_{A,W,i}$ or according to $f_{E,W,i} \approx$ 1/c $\cdot$ $f_{A,W,i}$ with $f_{E,W,i} \neq f_{A,W,i}$,

    wherein the steps

    - generating a receive signal sequence ($s_{E,F,i}$) consisting of the receive signals ($s_E$) in that the receive signal generator (4) is triggered with the receive signal repetition rate $f_{E,W,i}$ by the controller (3),
    - generating a sampling signal sequence ($s_{A,F,i}$) consisting of the sampling signals ($s_A$) in that the sampling signal generator (5) is triggered with the sampling signal repetition rate $f_{A,W,i}$ by the controller (3),
    - generating a mixed signal sequence ($s_{M,i}$) in that the receive signal sequence ($s_{E,F,i}$) and the sampling signal sequence ($s_{A,F,i}$) are mixed with one another by the mixer (6),
    - low-pass filtering the mixed signal sequence ($s_{M,i}$) by the low-pass filter (7), and
    - determining a quality indicator ($Q_i$) of the low-pass filtered mixed signal sequence ($s_{F,i}$) by the controller (3),

    are executed for all i ∈ I and

    **that** a quality indicator ($Q_i$) which exceeds a predetermined quality threshold is then selected by the controller (3) from the determined quality indicators, and the sampling signal repetition rate $f_{A,W,i}$ and the receive signal repetition rate $f_{E,W,i}$ associated therewith are subsequently used.

2.  Method according to claim 1, wherein a start sampling signal repetition rate $f_{A,W,0}$ and an interpolation factor $N \in \{\mathbb{N} \geq 3\}$ are predetermined, that a new set $I = \{i : i \in \{1, ..., N\} \subseteq I \text{ and } (i + N) \in \mathbb{P}\}$ is determined, and that then the sampling signal repetition rates according to $f_{A,W,i} = f_{A,W,0} (1 + (i-1)/N)$ are determined only for i for all i ∈ I.

3.  Method according to claim 1, wherein a start sampling signal repetition rate $f_{A,W,0}$ and an interpolation factor $N \in \{\mathbb{N} \geq 3 \text{ and } N \in \mathbb{P}\}$ are predetermined, that a new set I = {i : i ∈ {1, ..., N} ⊂ I} is determined and that then the sampling signal repetition rates according to $f_{A,W,i} = f_{A,W,0} (1 + (i-1)/N)$ are determined only for i for all i ∈ I.

4.  Method according to any one of claims 1 to 3, wherein each of the receive signals ($s_E$) is a pulse and/or each of the sampling signals ($s_A$) is a pulse, preferably the pulse(s) is/are broadband, particularly preferably the pulse(s) is/are Dirac pulses.

5.  Method according to any of claims 1 to 4, wherein each of the quality indicators ($Q_i$) is a signal-to-noise ratio of the low-pass filtered mixed signal sequence ($s_{F,i}$).

6.  Method according to any one of claims 1 to 5, wherein the receive signal generator (4) has a transmit signal generator (8) for generating and transmitting transmit signals (ss) and a measuring probe (10), wherein the measuring probe (10) is designed for guiding the transmit signals (ss) and the receive signals ($s_E$) and for generating the receive signals ($s_E$) by reflection of the transmit signals (ss) at a transition (12) of the measuring probe (10) to a medium (11), and wherein the transmit signals (ss) are generated and transmitted by the transmit signal generator (8), that the transmit signals (ss) are first guided by the measuring probe (10) to the transition (12) at which the receive signals ($s_E$) are generated by reflection, and then the receive signals ($s_E$) are guided back via the measuring probe (10).

7.  Measuring device (1) for time domain reflectometry with a signal processing device (2),

wherein the signal processing device (2) has a controller (3), a receive signal generator (4) for generating receive signals ($s_E$) with an upper receive signal cut-off frequency $f_{E,G}$, a sampling signal generator (5) for generating sampling signals ($s_A$), a mixer (6) and a low-pass filter (7) with a low-pass cut-off frequency $f_{T,G}$,

wherein the receive signal generator (4) has a transmit signal generator (8) for generating and transmitting transmit signals (ss) and a measuring probe (10),

wherein the measuring probe (10) is designed for guiding the transmit signals (ss) and the receive signals ($s_E$) and for generating the receive signals ($s_E$) by reflection of the transmit signals (ss) at a transition (12) of the measuring probe (10) to a medium (11),

**characterized in**

**that** the controller (3) is, first of all, designed to

- generate a set $I \subset \mathbb{N}$ and a plurality of sampling signal repetition rates $f_{A,W,i}$ with a running variable i for all i ∈ I and
- determine a receive signal repetition rate associated with each of the sampling signal repetition rates $f_{A,W,i}$ with a factor c = $f_{E,G}/(f_{E,G} - f_{T,G})$ either according to $f_{E,W,i} \approx c \cdot f_{A,W,i}$ or according to $f_{E,W,i} \approx 1/c \cdot f_{A,W,i}$ with $f_{E,W,i} \neq f_{A,W,i}$,

**that** the controller (3) is further designed for all i ∈ I

- to generate a receive signal sequence ($s_{E,F,i}$) consisting of the receive signals ($s_E$) by triggering the receive signal generator (4) with the receive signal repetition rate $f_{E,W,i}$
- to generate a sampling signal sequence ($s_{A,F,i}$) consisting of the sampling signals ($s_A$) by triggering the sampling signal generator (5) with the sampling signal repetition rate $f_{A,W,i}$
- to determine a quality indicator ($Q_i$) from a mixed signal sequence ($s_{F,i}$) low-pass filtered by the low-pass filter (7), wherein the mixed signal sequence ($s_{M,i}$) is generated by the mixer (6) by mixing the receive signal sequence ($s_{E,F,i}$) and the sampling signal sequence ($S_{A,F,i}$), and

**that** the controller (3) is further designed to then select, from the determined quality indicators, a quality indicator ($Q_i$) which exceeds a predetermined quality threshold, and to subsequently use the sampling signal repetition rate $f_{A,W,i}$ and the receive signal repetition rate $f_{E,W,i}$ associated therewith.

8. Measuring device (1) according to claim 7, wherein the controller (3) is designed to execute a method according to any one of claims 2 to 5.

9. Measuring device (1) according to claim 7 or 8, wherein the measuring device (1) is a level measuring device and the measuring probe (10) is a level measuring probe.

**Revendications**

1. Procédé d'amélioration de la qualité de signaux de réception échantillonnés ($s_E$) à l'aide d'un dispositif de traitement de signal (2),

dans lequel le dispositif de traitement de signal (2) comporte une unité de commande (3), un générateur de signaux de réception (4) destiné à générer des signaux de réception ($s_E$) ayant une fréquence limite de signal de réception supérieure $f_{E,G}$, un générateur de signaux d'échantillonnage (5) destiné à générer des signaux d'échantillonnage ($s_A$), un mélangeur (6) et un filtre passe-bas (7) ayant une fréquence limite passe-bas $f_{T,G}$,

**caractérisé**

**en ce qu'**un ensemble $I \subset \mathbb{N}$ et une pluralité de fréquences de répétition de signaux d'échantillonnage $f_{A,W,i}$, avec une variable d'exécution i pour tous les i ∈ I, sont générés par l'unité de commande (3),

**en ce qu'**une fréquence de répétition de signaux de réception associée à chacune des fréquences de répétition de signaux d'échantillonnage $f_{A,W,i}$ est déterminée par l'unité de commande (3) soit selon $f_{E,W,i} = c \cdot f_{A,W,i}$ soit selon $f_{E,W,i} = 1/c \cdot f_{A,W,i}$ avec $f_{E,W,i} \neq f_{A,W,i}$ et avec un facteur

$$c = f_{E,G}/(f_{E,G} - f_{T,G}),$$

dans lequel les étapes qui comprennent

- la génération d'une séquence de signaux de réception ($s_{E,F,i}$) constituée des signaux de réception ($s_E$), en faisant en sorte que le générateur de signaux de réception (4) soit déclenché par l'unité de commande (3) à la fréquence de répétition de signaux de réception $f_{E,W,i}$,
- la génération d'une séquence de signaux d'échantillonnage ($s_{A,F,i}$) constituée des signaux d'échantillonnage ($s_A$), en faisant en sorte que le générateur de signaux d'échantillonnage (5) soit déclenché par l'unité de commande (3) à la fréquence de répétition de signaux d'échantillonnage $f_{A,W,i}$,
- la génération d'une séquence de signaux de mélange ($s_{M,i}$) en faisant en sorte que le mélangeur (6) mélange l'une à l'autre la séquence de signaux reçus ($s_{E,F,i}$) et la séquence de signaux d'échantillonnage ($s_{A,F,i}$),
- le filtrage passe-bas de la séquence de signaux de mélange ($s_{M,i}$) par le filtre passe-bas (7) et
- la détermination par l'unité de commande (3) d'un indicateur de qualité ($Q_i$) de la séquence de signaux de mélange filtrés par filtrage passe-bas ($s_{F,i}$),

sont exécutées pour la totalité des $i \in I$ et
**en ce qu'**ensuite, un indicateur de qualité ($Q_i$) qui dépasse un seuil de qualité prédéfini est sélectionné par l'unité de commande (3) parmi les indicateurs de qualité déterminés, et en ce que la fréquence de répétition de signaux d'échantillonnage $f_{A,W,i}$ et la fréquence de répétition de signaux de réception $f_{E,W,i}$ qui lui sont associées sont ensuite utilisées.

2. Procédé selon la revendication 1, dans lequel une fréquence de répétition de signaux d'échantillonnage de départ $f_{A,w,0}$ et un facteur d'interpolation $N \in \{\mathbb{N} \geq 3\}$ sont prédéfinis, un nouvel ensemble I = {i : i $\in$ {1, ..., N} $\subseteq$ I et (i+N) $\in \mathbb{P}$} est déterminé, puis, pour tous les $i \in I$, les fréquences de répétition de signaux d'échantillonnage sont déterminées conformément à $f_{A,W,i}$ = $f_{A,w,0}$(1+(i-1)/N) pour les i uniquement.

3. Procédé selon la revendication 1, dans lequel une fréquence de répétition de signaux d'échantillonnage de départ $f_{A,w,0}$ et un facteur d'interpolation $N \in \{\mathbb{N} \geq 3$ et $N \in \mathbb{P}\}$ sont prédéfinis, un nouvel ensemble I = {i : i $\in$ {1, ..., N} $\subseteq$ I} est déterminé puis, pour tous les $i \in I$, les fréquences de répétition de signaux d'échantillonnage sont déterminées conformément à $f_{A,W,i}$ = $f_{A,w,0}$(1+(i-1)/N) pour les i uniquement.

4. Procédé selon l'une quelconque des revendications 1 à 3, dans lequel chacun des signaux de réception ($s_E$) est une impulsion et/ou chacun des signaux d'échantillonnage ($s_A$) est une impulsion, de préférence l'impulsion ou les impulsions sont à large bande, et de manière particulièrement préférée l'impulsion ou les impulsions sont des impulsions de Dirac.

5. Procédé selon l'une quelconque des revendications 1 à 4, dans lequel chacun des indicateurs de qualité ($Q_i$) est une distance signal-brouillage de la séquence de signaux de mélange filtrée par filtrage passe-bas ($s_{F,i}$).

6. Procédé selon l'une quelconque des revendications 1 à 5, dans lequel le générateur de signaux de réception (4) comprend un générateur de signaux d'émission (8) destiné à générer et émettre des signaux d'émission (ss) et une sonde de mesure (10), dans lequel la sonde de mesure (10) est conçue pour guider les signaux d'émission (ss) et les signaux de réception ($s_E$) et pour générer les signaux de réception ($s_E$) par réflexion des signaux d'émission (ss) sur une transition (12) de la sonde de mesure (10) vers un milieu (11), et dans lequel les signaux d'émission (ss) sont générés et émis par le générateur de signaux d'émission (8), les signaux d'émission (ss) sont d'abord guidés par la sonde de mesure (10) vers la transition (12), sur laquelle les signaux de réception ($s_E$) sont générés par réflexion, puis les signaux de réception ($s_E$) sont renvoyés par l'intermédiaire de la sonde de mesure (10).

7. Appareil de mesure (1) destiné à la réflectométrie de domaine temporel au moyen d'un dispositif de traitement de signal (2),

dans lequel le dispositif de traitement de signal (2) comporte une unité de commande (3), un générateur de signaux de réception (4) destiné à générer des signaux de réception ($s_E$) ayant une fréquence limite de signal de réception supérieure $f_{E,G}$, un générateur de signaux d'échantillonnage (5) destiné à générer des signaux d'échantillonnage ($s_A$), un mélangeur (6) et un filtre passe-bas (7) ayant une fréquence limite passe-bas $f_{T,G}$,

dans lequel le générateur de signaux de réception (4) comporte un générateur de signaux d'émission (8) destiné à générer et émettre des signaux d'émission (ss) et une sonde de mesure (10),

dans lequel la sonde de mesure (10) est conçue pour guider les signaux d'émission (ss) et les signaux de réception ($s_E$) et pour générer les signaux de réception ($s_E$) par réflexion des signaux d'émission (ss) sur une transition (12) de la sonde de mesure (10) vers un milieu (11), **caractérisé**
**en ce que** l'unité de commande (3) est d'abord conçue pour

- générer un ensemble $I \subset \mathbb{N}$ et une pluralité de fréquences de répétition de signaux d'échantillonnage $f_{A,W,i}$ avec une variable d'exécution i pour tous les $i \in I$ et
- déterminer une fréquence de répétition de signaux de réception associée à chacune des fréquences de répétition de signaux d'échantillonnage $f_{A,W,i}$ soit selon $f_{E,W,i} = c \cdot f_{A,W,i}$ soit selon $f_{E,W,i} = 1/c \cdot f_{A,W,i}$ avec $f_{E,W,i}$ # $f_{A,W,i}$ et avec un facteur $c = f_{E,G}/(f_{E,G} - f_{T,G})$,

**en ce que** l'unité de commande (3) est en outre conçue, pour tous les $i \in I$, pour

- générer une séquence de signaux de réception ($s_{E,F,i}$) constituée des signaux de réception ($s_E$) en déclenchant le générateur de signaux de réception (4) à la fréquence de répétition de signaux de réception $f_{E,W,i}$,
- générer une séquence de signaux d'échantillonnage ($s_{A,F,i}$) constituée des signaux d'échantillonnage ($s_A$) en déclenchant le générateur de signaux d'échantillonnage (5) à la fréquence de répétition de signaux d'échantillonnage $f_{A,W,i}$,
- déterminer un indicateur de qualité ($Q_i$) à partir d'une séquence de signaux de mélange ($s_{F,i}$) filtrés par filtrage passe-bas par le filtre passe-bas (7), dans lequel la séquence de signaux de mélange ($s_{M,i}$) est générée par le mélangeur (6) par mélange de la séquence de signaux de réception ($s_{E,F,i}$) et de la séquence de signaux d'échantillonnage ($s_{A,F,i}$) et

**en ce que** l'unité de commande (3) est en outre conçue pour sélectionner ensuite, parmi les indicateurs de qualité déterminés, un indicateur de qualité ($Q_i$) qui dépasse un seuil de qualité prédéfini, et pour utiliser ensuite la fréquence de répétition de signaux d'échantillonnage $f_{A,W,i}$ et la fréquence de répétition de signaux de réception $f_{E,W,i}$ qui lui sont associées.

8. Appareil de mesure (1) selon la revendication 7, dans lequel l'unité de commande (3) est conçue pour mettre en œuvre un procédé selon l'une quelconque des revendications 2 à 5.

9. Appareil de mesure (1) selon la revendication 7 ou 8, dans lequel l'appareil de mesure (1) est un appareil de mesure de niveau de remplissage et la sonde de mesure (10) est une sonde de mesure de niveau de remplissage.

Fig. 1

Fig. 2

Fig. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19949992 A1